# EUROPEAN PATENT APPLICATION

(11) **EP 3 978 187 A1**
(43) Date of publication of application: **06.04.2022**
(21) Application number: 21196485.3
(22) Date of filing: 14.09.2021
(51) Int. Cl.: B23Q 3/06

(54) **CLAMPING SYSTEM**

(30) Priority: 30.09.2020 GB 202015433
(71) Applicant: Rolls-Royce plc, London N1 9FX (GB)
(72) Inventor: Novovic, Donka, Derby, DE24 8BJ (GB); Axinte, Dragos, Derby, DE24 8BJ (GB); Gameros Madrigal, Andres, Derby, DE24 8BJ (GB); Gavaldà Diaz, Oriol, Derby, DE24 8BJ (GB)
(74) Representative: Rolls-Royce plc

(57) **Abstract**

A clamping mechanism for machining a composite component. The clamping mechanism comprising two or more opposing clamping plates, each clamping plate comprising a clamping surface; and wherein each clamping surface is adaptable to follow the microstructural surface of the composite component being clamped. The clamping surface may comprise a plurality of deformable micropillars featuring a body that extends to a base on the clamping plates and a head that deforms to follow the microstructural surface of the composite component. The clamping surface in use may be an exact negative of the microstructural surface of the component clamping surface. Each clamping surface may comprise a disposable insert that replicates exclusively at the point of contact the microstructural surface of the component being clamped.

## Description

### Overview of the disclosure

The disclosure relates to a clamping mechanism for a composite material component. In particular, the disclosure relates to a microtextured clamping plates for the clamping mechanism for machining a composite material component.

### Background of the disclosure

Composite materials are of growing interest in a number of fields of technology. In aerospace there is a growing amount of attention on CMC materials. These materials are a substitute for the high temperature superalloys that are currently used in the hot sections of gas turbine engines. The benefits of these materials are that they are able to withstand higher operating temperatures, whilst requiring relatively less cooling air than superalloy counterparts. At the same time, they also offer a significant weight saving benefit over traditional alloy materials.

CMC components are manufactured to a near net shape condition, however, they still require some machining operations to achieve the final shape and tolerances of the component. These machining processes may include grinding, drilling or milling. One of the main challenges with machining CMC materials is the ability to hold the as-formed component securely in a clamping system whilst the machining processes are taking place. The issue in this regard is the textured nature of the surface of the CMC components; they have an underlying woven structure which is the result of the architecture of the fibres. This results in a miss-match between the clamping surface and the CMC at micro-level, which increases the risk of mis-alignment (dimensional inaccuracy) or damage to the CMC component. The increase in risk of damage is due to the high clamping load only being applied to certain highly localised areas of the workpiece; this can result in damage to the fibres or to breakage in the matrix. Over time, as well, this uneven distribution in stress can also increase the damage to the work-holding clamping system that is used.

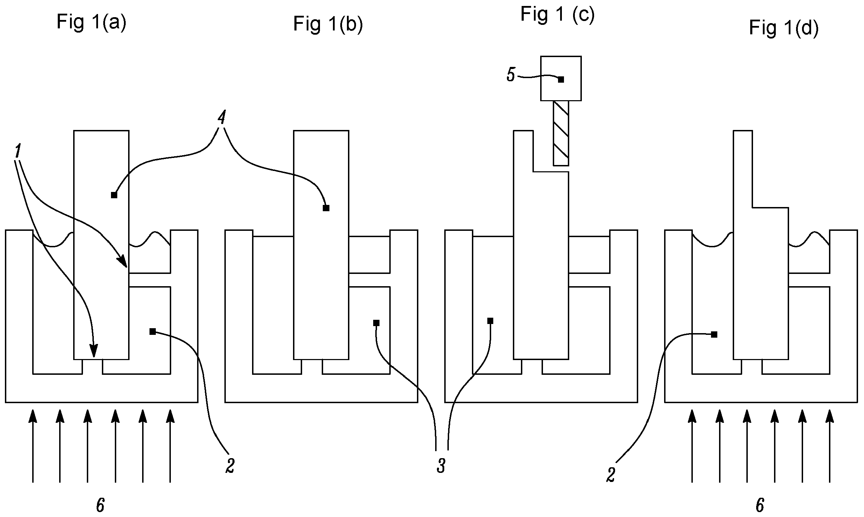

To overcome these issues, current approaches for work-holding apparatus for complex shape components feature the use of phase change materials, such as phase change alloys. An example of this is shown in **figure 1****.** Here the workpiece 4 is placed on locators 1 in a phase change material in its liquid state 2 as shown in figure 1a. A temperature control source 6 is applied to change the phase change material to a solid as shown in figure 1b. The machining process can then be carried out as shown in figure 1c using a tool 5. A heat/temperature control source is then applied to revert the phase change material back to a liquid as shown in figure Id. The phase change material effectively encapsulates a workpiece by submerging it into a liquid, solidifying the liquid so that it grips the component. At this stage the work can be performed on the held component, before it is released by transitioning the phase change solid back to a liquid, thus allowing the component to be removed. This process however is complex and requires additional equipment and a high degree of process control. Moreover, the phase change material can present environmental and safety concerns and must be selected so it does not chemically react with the clamped component. Furthermore, additional cleaning of the component after the machining is required to remove the phase change material. This removal process is quite complex and presents a risk of contamination and potential chemical damage to the component if the phase change liquid is not properly controlled. Alternatively, conformable approaches using adhesives to temporarily join the localised areas of CMC component to the work-holding 'location pads' can be used. However, these methods are associated with additional adhesive removal operation and associated risk of component damage, or contamination by some of adhesive residue left at the CMC surface. Alternative conformable approaches such as the use of pin arrays do not work well. This is because the pin arrays do not adapt well to the microtextural surface of the CMC component, resulting from the pins being larger than the microstructure features on the surface of the component. As such there is a desire to develop an improved solid-state clamping system for accurately holding a component so that it can be machined.

### Summary of the disclosure

A first aspect of the invention provides a clamping mechanism for machining a composite component, the clamping mechanism comprising two or more opposing clamping plates, each clamping plate comprising a clamping surface; and wherein each clamping surface is adaptable to follow the microstructural surface of the composite component being clamped.

By using a clamping surface which is adapted to follow the microtextural surface of the composite component it allows for a greater contact area of clamping. This reduces the localised forces which can damage the composite component and the clamping plates.

Each clamping surface may comprise a disposable insert that replicates exclusively at the point of contact the microstructural surface of the component being clamped.

By using an insert that replicates exclusively at the point of contact the microstructural surface of the component being clamped it increase the surface contact between the clamp and the component. This further reduces any damage to the clamp or clamping pad.

The clamping surface in use be an exact negative of the microstructural surface of the component clamping surface.

By using an insert that exactly replicates the point of contact means that there is a perfect copy of the clamping surface, thus maximising the contact area of the clamping pads.

The microtextural surface to be clamped may be scanned using a scanning technique, before the negative is reproduced for the clamping surface which is used on the clamping surface.

By scanning the surface, it is possible to obtain an exact image of the clamping surface and as such the quality of the clamping surface is improved.

The scanning technique may be an optical or laser scanning technique.

Using laser or optical scanning techniques provides a reliable and accurate way of measuring the surface of the clamping surface.

The clamping surface may be made as an algorithmic negative representation of the expected surface of the composite component that is to be clamped.

Using an algorithmic technique allows for a clamping plate that can be used on a number of different workpieces, allowing it to generally replicate the surface features.

The clamping surface may comprise a plurality of deformable micropillars featuring a body that extends to a base on the clamping plates and a head that deforms to follow the microstructural surface of the composite component.

The use of deformable pillars allows for the surface of the clamping pad to adapt to the surface of the composite being clamped so that the stress on the clamping pad and the composite material is reduced.

The micropillars may be positioned so that under deformation the micropillars do not contact each other.

By not contacting each other, such as by being designed to bend away from each other means that each pad is capable of contacting the surface of the composite and is able to deform. As each contact pad can contact the surface of the composite clamping material means that localised stresses on the clamping pad and composite material are reduced.

The micropillars may have a non-uniform stiffness across the plurality of micropillars.

By having non-uniform stiffness it allows the micorpillars to deform so as to better match the surface of the composite clamping material.

The micropillars may have a non-uniform length.

By having non-uniform length allows the pillars to more locally match the possible variations in the clamping material surface. This results in an improved surface contact and reduces the localised stresses on the clamping pad and the composite clamping material.

The micropillars may have a height of less than 5 mm with a body of 0.8 mm x 0.8 mm and a head of 1 mm x 1 mm.

The clamping surface may be made from a plastics material or a metallic material.

Within the scope of this application it is expressly envisaged that the various aspects, embodiments, examples and alternatives, and in particular the individual features thereof, set out in the preceding paragraphs, in the claims and/or in the following description and drawings, may be taken independently or in any combination. For example, features described in connection with one embodiment are applicable to all embodiments, unless such features are incompatible.

### Brief discussion description of the figures

Embodiments will now be described by way of example only, with reference to the Figures, in which:
**Figure 1** presents a schematic illustration of a prior art method of clamping a composite material using a phase change material;
**Figure 2** shows a schematic longitudinal section of a conventional gas turbine engine;
**Figure 3** presents a 3-dimensional micrometre scale scan of the surface of testpiece woven CMC material;
**Figure 4** presents a schematic of one half of a clamping pad having a microtextured clamping surface;
**Figure 5** presents a schematic of a full clamping system incorporating a micro-scale structural surface of the clamping pad;
**Figure 6** presents a schematic of a portion of the clamping system incorporating microscale structural gripping pillars;
**Figure 7** presents a schematic of a clamping system incorporating microscale structural pillars on the clamping pad; and,
**Figure 8** presents a schematic of different embodiments of the microstructural pillars for the clamping pads.

### Detailed description of the disclosure

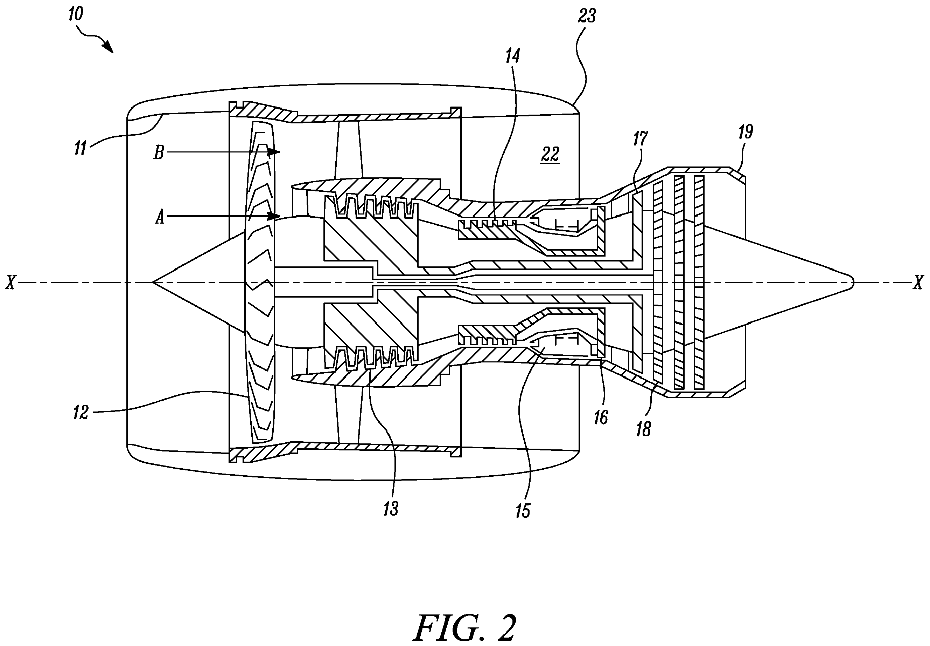

A turbofan gas turbine engine 10, as shown in **Figure 2**, comprises in flow series an intake 11, a fan 12, an intermediate pressure compressor 13, a high pressure compressor 14, a combustion chamber 15, a high pressure turbine 16, an intermediate pressure turbine 17, a low pressure turbine 18 which are all rotatable about a principal axis of rotation 31, and an exhaust 19. The high pressure turbine 16 is arranged to drive the high pressure compressor 14 via a first shaft 20. The intermediate pressure turbine 17 is arranged to drive the intermediate pressure compressor 13 via a second shaft 21 and the low pressure turbine 18 is arranged to drive the fan 12 via a third shaft 22. In operation air flows into the intake 11 and is compressed by the fan 12. A first portion of the air flows through, and is compressed by, the intermediate pressure compressor 13 and the high pressure compressor 14 and is supplied to the combustion chamber 15. Fuel is injected into the combustion chamber 15 and is burnt in the air to produce hot exhaust gases which flow through, and drive, the high pressure turbine 16, the intermediate pressure turbine 17 and the low pressure turbine 18. The hot exhaust gases leaving the low pressure turbine 18 flow through the exhaust 19 to provide propulsive thrust. A second portion of the air bypasses the main engine and flows through a bypass duct 23 defined by a fan casing. The second portion of air leaving the bypass duct 23 flows through a bypass, or fan, nozzle to provide propulsive thrust.

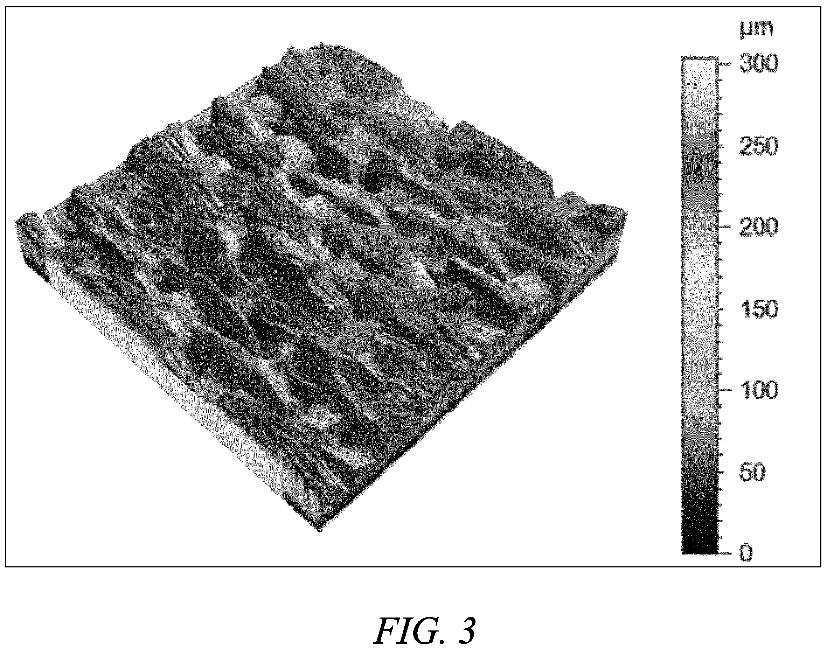

Many composite materials have a textured surface which results from the positioning of the fibres that form the composite material and how they have aligned with each other in the solid final component. As such, the microscale structure of the surface of a batch of components will vary. As shown for a simple example testpiece in **figure 3** there are considerable variations in the range of hundreds of microns exists across the surface of the composite. This variation in the surface topography extends across the entire testpiece and as such these variations make clamping components made from these materials problematic. Thus, it will be appreciated that the texturised surface of the components and the regular surface of the clamp will result in a reduced and nondeterministic contact area, which can affect the way in which the component is located within the workholding apparatus, impacting on the machined part geometry. The component can potentially be damaged during this clamping process due to the high localised stresses that will be generated due to the reduced contact area. Furthermore, the material of the clamp may be damaged by the component either by cracking, chipping, indentation, or by an increment on the wear rate of the clamping tool. As a consequence of this, there is a desire to have an improved clamping mechanism for holding such composite materials whilst various different machining processes are being performed on the component/workpiece.

The profile of the surface and the resulting issues are not limited to the use of CMC materials, but are also applicable to working on other composite materials such as organic matrix composites, carbon fibre and metal matrix composites. This is applicable because in order to finish specific features in components made from composite materials, as-formed stochastic, textured component surfaces are used for locating and fixing the component during machining down to size to form the final desired components.

To overcome the limitations of the materials and the clamping system it is desirable to find a means of holding the component so that the clamping surface conforms to the microtextural surface. As such it is desirable to have a clamping surface of the work-holding apparatus that is a negative or a close negative of the surface of the component. This will allow the clamping surface to fully contact the component and to more evenly distribute the pressure across the component so that there is a reduced chance of breakage of the clamp or damage to the component. A clamping system ideally consists of either two moveable surfaces that close around the component or a fixed surface and a moveable surface that comes towards the fixed surface to be clamped. Alternatively, the surface could be mounted to a robotic gripper.

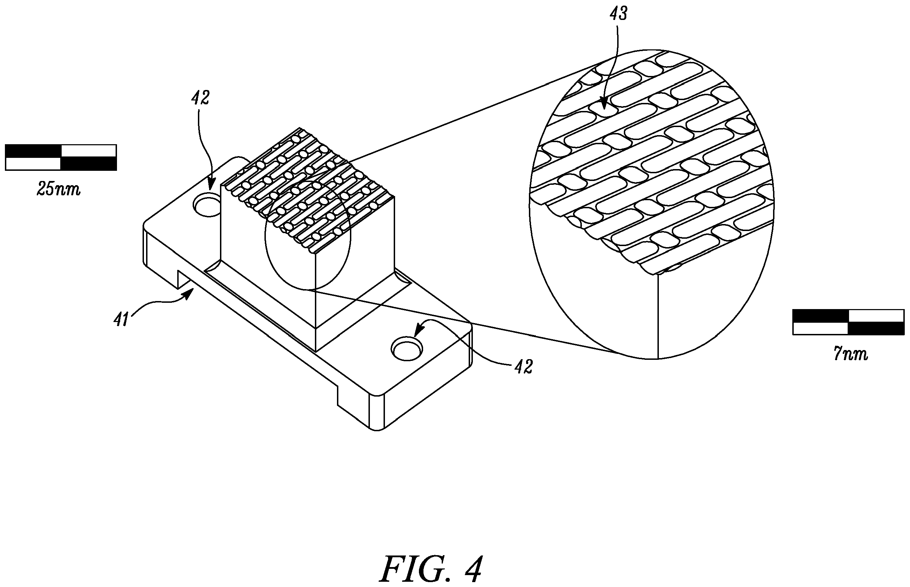

**Figure 4** shows an example of a clamping plate with an enlargement of the clamping surface. Such a clamping plate may be used as either a fixed clamping plate or a moveable clamping plate. The clamping plate 41 has screw holes 42 to hold it against a surface or against an actuating surface that allows the clamping plate to be moved. The clamping plate is lined with a clamping surface 43. The surface shown is a negative of the surface of the component. In this way the surface pad exactly mimics the microtopography of the surface of the component, and as such accommodates the topography created by the matrix and the fibres that form the component. As such, this system maximises the contact surface area of the locating and clamping surface, thus reducing any localised stresses on the component. The concept of reproducing a negative of the clamping surface can be done by different methods. Firstly, the surface of the component to be clamped could be scanned and an exact negative can be built form the scan. The scan may be done for example via a light interferometer technique or laser scanning. Such a scan would require a lot of data to be stored and processed. Alternatively, it could be done through mathematical modelling by creating an algorithm that mimics the clamped surface based on repetition patterns that exist in composites due to their woven structure. An example of this is a 5 Hardness Satin 5HS model. Using an algorithm that mimics a nominal pattern reduces the amount of data that needs to be stored and processed to allow the manufacture of the component. Using the obtained data that replicates a negative of the of the clamping surface a second algorithm is used to develop a point cloud. This point cloud can be imported into a Computer Aided Design (CAD) package to define the geometry of the fixtures locating and clamping pads. The algorithm then generates the surface by assuming that every tow (bundle of fibres) is equal and considering only the composite weaving pattern or alternatively, for improved accuracy by considering the weaving pattern as well as the random nature of each individual tow's dimensions.

Using the surface scan or the algorithm determined method, the clamping surface (pad) is then manufactured. The manufacturing of the clamping surface can be done through any appropriate method. For example, this may be through the use of additive manufacturing techniques, which allow for a whole customised fixture for materials to be easily, quickly and inexpensively produced. The surface may be made from a stiff material, or alternatively from relatively elastic material, such as resins, polymers, silicone, steel etc. This would allow the material on the clamping surface to deform so as to increase the contact area with the component surface and thus reduce the localised stresses on the surface of the clamp and on the component.

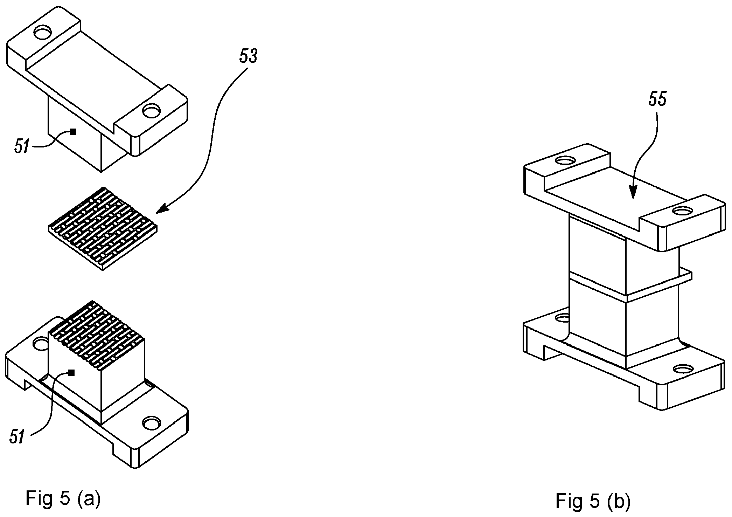

This process is completed for both of the clamping surfaces, as shown in **Figure 5****.** Both of the clamping plates 51 are similar in design to that shown in Figure 4. The two clamping surface pads 53 may be the same or they may be different depending on the data generated from the scan or algorithm used to produce the clamping surface. Once the component is in place, the clamps can be brought together by a clamping force 55 to hold the component/workpiece in place during the manufacturing steps; this is shown in Figure 5b. The microtopography structure of the textured pads allows for an increased and constant clamping area to exist between the clamping surfaces. As the components typically have a stochastic nature, due to random variables such as different processing conditions, it is challenging to generate a component surface topography that can obtain a 100% contact area between the fixture and the workpiece. However, a higher percentage contact area may be increased either performing a high-resolution scanning of the surface to be clamped in order to obtain the most accurate representation of the surface. If the algorithm approach is used an optimisation of the code based on large measurement data to ensure that the generated surface is an accurate representation of what will be the mean surface of the component to be held. And additionally, or alternatively, the use of a relatively less stiff material that is able to comply the minor matching defects that can appear between the component surface and the fixture surface. Using this method reduces the number of processing steps and improves positional accuracy.

As discussed, the surface pads can be made through additive manufacturing methods. This may be high resolution additive manufacturing means. Alternatively, the surface pad could be made through accurate manufacturing processes such as machining or laser cutting, so as to cut all of the microstructures directly form the stock material, or through injection moulding. The use of conventional approaches allows for better control of the construction of the microfeatures. It also allows for a broader range of materials that can be used to manufacture the surface pads.

The benefit of adopting such an approach is that as the surface of the clamping pads mimics the topography of the component at a micro-scale level, reduces the risk of damage to the composite workpiece. It also allows for distributed wear on the clamping tool, which increases the life of the component. The use of such clamping can also be used for mechanical testing as the matching of the peaks and valleys of the composite material prevents the destabilisation of the material due to uncontrolled tow damage/breakage caused by clamping loads. By increasing the contact area of the clamping surface, the greater manufacturing loads can be increased. This allows for more aggressive manufacturing operations and thus in a reduced cycle time for the production of the component.

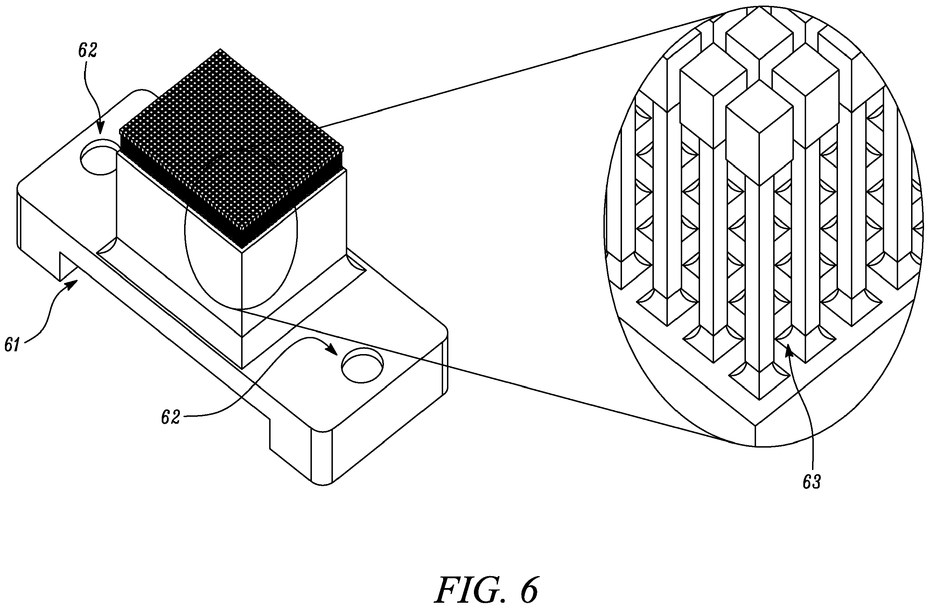

**Figure 6** shows an example in which the negative of the machined object is formed by deformation of a clamping surface covered with micro-deformable structures with an enlargement of the clamping pad. The clamping plate 61 has screw holes 62 to hold it against a surface or against an actuating surface that allows the clamping plate to be moved. The clamping plate is lined with a clamping surface 63. The micro structures allow the clamping surface to deform in such a way as that they are able to conform to the random microscale texture/tow features of the composite surface to be clamped. The clamping surface is covered in a number of small micro pillars. These micro pillars are structured such that they have a body which connects a head to the clamping surface. In order to allow for the desired deformation; thus, allowing the head of the micropillars to conform to the micro structured surface of the composite material. The body of the micro pillars may be narrower than the head of the micro pillar. For example, the micropillars may have a height of less than 5 mm with a body of 0.8 mm x 0.8 mm and a head of 1mm x 1 mm. Other suitable shape and size of the micro pillars will be apparent to the person skilled in the art. However, typically they will have a length less than 5 mm and head size of less than 1 mm x 1 mm. The size of the different micro pillars may be adaptable to suit the purpose or the composite material that is being used. As such the clamping surface may be tuneable so as to conform to the application to which it is desired. A base may also be present in the micro pillars at the point that it connects to the surface of the clamping pad so as to increase the contact surface area.

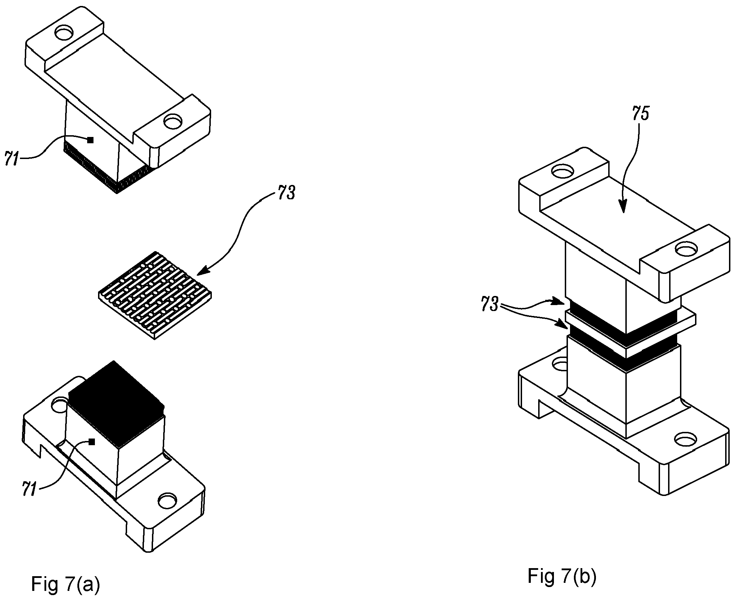

With the micro pillar design the composite structure is held between the opposing clamping pads 71, as shown in **Figure 7****.** The microstructure pillars allow the clamping surface to conform to the surface of the composite structure once a force 75 is applied. This is because as the clamping pads 73 are brought into contact with the composite article the micro pillars are able to deform their shape so that they adapt the clamping surface microtextural protrusions. Each pillar will deform to suit the individual conditions to which it is to contact with. It therefore achieves a near negative effect on the surface of the component. This produces an equivalent effect to forming a negative of the clamping surface. The use of a larger cross section head allows for the contact between the CMC and composite is maximised as the pillars are able to flex in a direction normal to the component contact area. Thus, the system is fully conformable with the composite on a micro level. The microstructure deformation can be either plastic or elastic depending upon the material that the pillar is made from. The microstructures could be made from resin materials, polymeric materials, or suitable metal materials such as titanium or steel. The nature of the deformation may also be conditional to the overall contact area between the composite surface and the clamp.

The clamping pad could be made through high resolution Additive Manufacturing means or it may be made through conventional accurate manufacturing processes. For example, using a laser cutting it is possible to cut the entire micropillar from a stock material, or via injection moulding. By using conventional approaches, it allows for greater control of the micro features, and also allows for a greater choice regarding material selection. The micropillars can be constructed from either polymer materials or from metallic materials. The clamping pads are designed to be replaceable on the clamping plates. The pads may be replaced after a single use or may be reusable over a number of times.

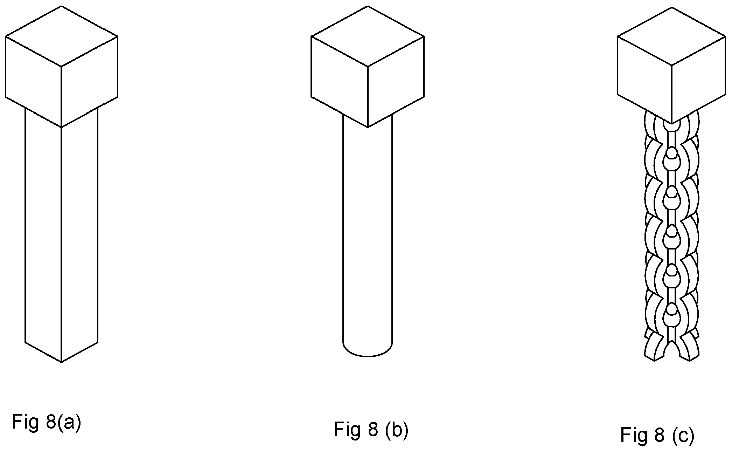

The micropillar may have a number of different shapes as shown in **Figure 8****.** As shown in figure 8a the pillar may have a square cross section with a cubic head. However, the shape of the body affects the bending properties and the stiffness of the micropillars. As such, by designing the pillars the bending can be controlled so that the pillars do not contact each other when they deform; thus, further improving the surface contact area with the composite structure. The micropillars may not all be the same, some may have different stiffness properties to allow the pillars to have a greater absorption of the vibration during machining processes. This change in stiffness can be attained through tailoring the shape of the body of the micropillar or by varying the thickness of the body. Figure 8b shows an example of a micropillar having a round cross section. Figure 8c presents a micropillar body having a controlled shape in which the sections have been removed allowing it to have a controlled deformation. The micropillar head can also have different shape and size. As discussed, it is possible to combine the micro-structures of the pillars and the head that are distributed across the clamping surface. The micro-structure distribution/spacing and orientation can all be varied relative to the surface of the clamping pad in order to suit a specific application. As such it could be designed with regions of high density of micropillars and others with a lower density of micropillars.. The clamping pad may be composed of micropillars that are all oriented perpendicular to the surface of the clamping pad. Additionally, or alternatively, the micropillars may be mounted at an angle relative to the surface of the clamping pad. This angle may lie for example between 89 and 10° relative to the surface. For example, the micropillars may be angled at 45° relative to the clamping surface. The clamping pads may all be the same length, so that the top is relatively flat. Alternatively, the micropillars may be of different lengths to so that the top of the pad more closely reflects the complex geometry of the component to be manufactured. By doing this it allows for proper clamping of complex shaped objects and reduces the risk of them being damaged during machining operations.

The micropillars may be connected directly to the surface of the clamping plate. Alternatively, they may be mounted as part of a disposable pad or inserts that can be mounted to the clamping plate. The use of disposable pads or inserts allows the clamping plates to be used multiple times with a reduced risk of failure. The inserts may be designed to be rapidly inserted onto the clamping plate before every manufacturing process step and potentially discarded or reused for a pre-determined number of cycles. Further benefits of the use of inserts is that they increase the possibilities with regards to the material selection for the micropillars. This opens up the potential to use low cost plastic materials that can be used as part of a high-resolution three-dimensional printing. Furthermore, as each clamp is disposable, then it reduces the chance of chips and waste material from the machining process attaching itself to the clamping surface and therefore does not affect the performance of the clamp on the next machining operation.

The use of such clamping pads can also be used for clamping or holding jaws for inspection and mechanical testing of composite materials. The clamping pads with deformable columns can also be used to increase the holding capability and dexterity of mechanical grippers for removal of components with uneven micro surfaces since the pillars themselves adapt to the microstructure of the material (e.g. components with rough coatings).

It will be understood that the invention is not limited to the described examples and embodiments and various modifications and improvements can be made without departing from the concepts described herein and the scope of the claims. Except where mutually exclusive, any of the features may be employed separately or in combination with any other features in the disclosure extends to and includes all combinations and sub-combinations of one or more described features.

## Claims

1. A clamping mechanism for machining a composite component, the clamping mechanism comprising two or more opposing clamping plates (41, 51, 61 71), each clamping plate comprising a clamping surface; and wherein each clamping surface (43, 53, 63 73) is adaptable to follow the microstructural surface of the composite component being clamped.

2. The clamping mechanism as claimed in claim 1, wherein each clamping surface (43, 53, 63 73) comprises a disposable insert that replicates exclusively at the point of contact the microstructural surface of the component being clamped.

3. The clamping mechanism of any previous claim wherein the clamping surface (43, 53, 63 73) in use is an exact negative of the microstructural surface of the component clamping surface.

4. The clamping mechanism as claimed in claim 3, wherein a microtextural surface to be clamped is scanned using a scanning technique, before the negative is reproduced for the clamping surface which is used on the clamping surface.

5. The clamping mechanism as claimed in claim 4, wherein the scanning technique is an optical or laser scanning technique.

6. The clamping mechanism as claimed in either claim 1 or claim 2 wherein the clamping surface (43, 53, 63 73) is made as an algorithmic negative representation of the expected surface of the composite component that is to be clamped.

7. The clamping mechanism as claimed in either claim 1 or 2, wherein the clamping surface (43, 53, 63 73) comprises a plurality of deformable micropillars featuring a body that extends to a base on the clamping plates and a head that deforms to follow the microstructural surface of the composite component.

8. The clamping mechanism as claimed in claim 7, wherein the micropillars are positioned so that under deformation the micropillars do not contact each other.

9. The clamping mechanism as claimed in either claims 7 or 8, wherein the micropillars have a non-uniform stiffness across the plurality of micropillars.

10. The clamping mechanism as claimed in any one of claims 7-9 wherein the micropillars have a non-uniform length.

11. The clamping mechanism as claimed in any one of claims 7-10, wherein the micropillars have a height of less than 5 mm with a body of 0.8 mm x 0.8 mm and a head of 1 mm x 1 mm.

12. The clamping mechanism as claimed in any preceding claim wherein the clamping surface (43, 53, 63 73) is made from a plastics material or a metallic material.
